(19) Europäisches Patentamt
European Patent Office
Office européen des brevets

(11) **EP 3 726 193 A1**

(12) **EUROPEAN PATENT APPLICATION**
published in accordance with Art. 153(4) EPC

(43) Date of publication:
**21.10.2020   Bulletin 2020/43**

(51) Int Cl.:
*G01M 13/00* (2019.01)          *G01N 3/08* (2006.01)

(21) Application number: **18887695.7**

(86) International application number:
**PCT/JP2018/045203**

(22) Date of filing: **10.12.2018**

(87) International publication number:
**WO 2019/117053 (20.06.2019 Gazette 2019/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority:   **15.12.2017   JP 2017240475**

(71) Applicant: NEC Corporation
**108-8001 Tokyo (JP)**

(72) Inventors:
• **INOUE Hirofumi**
  **Tokyo 108-8001 (JP)**
• **TAKATA Soichiro**
  **Tokyo 108-8001 (JP)**
• **SHINODA Shigeki**
  **Tokyo 108-8001 (JP)**
• **KIKUCHI Katsumi**
  **Tokyo 108-8001 (JP)**

(74) Representative: **Betten & Resch
Patent- und Rechtsanwälte PartGmbB
Maximiliansplatz 14
80333 München (DE)**

(54)   **ANALYZING DEVICE, DIAGNOSTIC METHOD, AND PROGRAM RECORDING MEDIUM**

(57)   In order for a state of degradation of a pipeline to be estimated with sufficient diagnostic accuracy, this analyzing device comprises: a material property calculating means for calculating a material property of a pipeline being inspected, on the basis of measurement information including a load applied to the pipeline being inspected, and a displacement corresponding to the load applied to the pipeline being inspected; and a degree of deterioration calculating unit which calculates a degree of deterioration of the pipeline being inspected, on the basis of the material property of the pipeline being inspected, calculated by the material property calculating means.

Fig.1

**Description**

[Technical Field]

The present invention relates to an analyzing device, a diagnostic method, and a program for diagnosing a state of a pipeline.

[Background Art]

In developed countries, aging degradation of public facilities is a social problem. For example, pipeline networks which transport resources such as water, oil, and gas include many in use beyond service lives thereof, and an accident such as a fluid leakage and a pipeline rupture, being caused by degradation of the pipeline networks, has become a problem. For the purpose of preventing an occurrence of such an accident, an operator visually inspects an exterior appearance of such a pipeline. However, since an inner surface of an actual pipeline is sometimes corroded, it is necessary to perform diagnosis in consideration of not only an exterior appearance of the pipeline but also a state of an inside thereof.

PTL 1 discloses a method of measuring a thickness of a pipeline in a plant for nuclear power generation, thermal power generation or the like. In the method of PTL 1, an active sensor is used, in which an electromagnetic oscillator that sweeps and outputs an inside of a predetermined frequency band and an optical fiber sensor that detects a dynamic distortion of an object being measured are integrated with each other. Moreover, in the method of PTL 1, the active sensor is attached to a pipeline, an ultrasonic wave or a vibration designated at a predetermined frequency of more than 0 to 10 megahertz is input in a thickness direction of the pipeline, and a reflected wave of the input ultrasonic wave or vibration or a composite wave thereof is detected.

PTL 2 discloses an inspection method of inspecting a state of degradation of an embedded pipeline. In the method of PTL 2, a correlation relationship between parameters and impact elastic wave test data is acquired in advance, in which the parameters are acquired from a force-deformation relationship indicating a relationship between a force applied to a test pipe from outside and deformation of the test pipe being caused by the force, and the impact elastic wave test data are acquired by performing an impact elastic wave test on the test pipe. In the method of PTL 2, based on the correlation relationship between the parameters acquired from the force-deformation relationship and the impact elastic wave test data, impact elastic wave measurement data of a pipe being inspected, being actually measured by the impact elastic wave test, are evaluated, and a degree of deterioration of the pipe being inspected is determined quantitatively.

[Citation List]

[Patent Literature]

[PTL 1] Japanese Unexamined Patent Application Publication No. 2010-071741
[PTL 2] Japanese Unexamined Patent Application Publication No. 2006-038598

[Summary of Invention]

[Technical Problem]

According to the method of PTL 1, a thickness of the object being measured is measured based on a detected resonance of an ultrasonic wave or a vibration signal, being generated by the pipeline, whereby a thickness reduction or corrosion of the pipeline can be inspected. However, in the method of PTL 1, since a material property of the pipeline is not taken into consideration, there has been a problem that an actual state of degradation of the pipeline cannot be acquired accurately.

According to the method of PTL 2, a degree of deterioration of the pipe being inspected can be inspected with high accuracy without being affected by an embedding environment. Incidentally, in the method of PTL 2, the degree of deterioration of the pipe being inspected is determined based on a correlation relationship between the parameters acquired from the force-deformation relationship acquired in advance and the impact elastic wave measurement data of the pipe being inspected. In other words, in the method of PTL 2, since the degree of deterioration of the pipe being inspected is determined by using the parameters acquired indirectly from the force-deformation relationship, there is a problem that diagnostic accuracy is not sufficient.

An object of the present invention is to provide an analyzing device capable of solving the above-mentioned problems and estimating a state of degradation of the pipeline with sufficient diagnostic accuracy.

[Solution to Problem]

An analyzing device according to one aspect of the present invention includes: material property calculating means for calculating a material property of a pipeline being inspected, based on measurement information including a load applied to the pipeline being inspected and a displacement associated with a load applied to the pipeline being inspected; and a degree-of-deterioration calculating unit for calculating a degree of deterioration of the pipeline being inspected, based on the material property of the pipeline being inspected, the material property being calculated by a material property calculating unit.

A diagnostic method according to one aspect of the present invention includes: calculating a material property of a pipeline being inspected, based on measurement information including a load applied to the pipeline being inspected and a displacement associated with a load applied to the pipeline being inspected; and calculating a degree of deterioration of the pipeline being inspected, based on the calculated material property of the pipeline being inspected.

A program according to one aspect of the present invention causes a computer to execute: processing of calculating a material property of a pipeline being inspected, based on measurement information including a load applied to the pipeline being inspected and a displacement associated with a load applied to the pipeline being inspected; and processing of calculating a degree of deterioration of the pipeline being inspected, based on the calculated material property of the pipeline being inspected.

[Advantageous Effects of Invention]

According to the present invention, a diagnosis system for estimating a state of degradation of a pipeline with sufficient diagnostic accuracy is able to be provided.

[Brief Description of Drawings]

Fig. 1 is a conceptual diagram illustrating a configuration of a diagnosis system according to a first example embodiment of the present invention.

Fig. 2 is a conceptual diagram illustrating a configuration of a diagnosis system according to a second example embodiment of the present invention.

Fig. 3 is a conceptual diagram illustrating an example of applying a load to a pipeline in order to acquire load information to be used by the diagnosis system according to the second example embodiment of the present invention.

Fig. 4 is a conceptual diagram for illustrating a pipe rigidity to be used by the diagnosis system according to the second example embodiment of the present invention.

Fig. 5 is a conceptual diagram illustrating one example of a state of the pipeline, the conceptual diagram serving for estimating a pipe rigidity model of a spatial distribution of the pipe rigidity to be used by the diagnosis system according to the second example embodiment of the present invention.

Fig. 6 is a conceptual diagram illustrating measured data of the spatial distribution of the pipe rigidity and an estimation example of the pipe rigidity model to be used by the diagnosis system according to the second example embodiment of the present invention.

Fig. 7 is a graph illustrating one example of a correlation relationship between an elastic modulus and a tensile strength, the correlation relationship being to be used by the diagnosis system according to the second example embodiment of the present invention.

Fig. 8 is a flowchart for illustrating an operation of the diagnosis system according to the second example embodiment of the present invention.

Fig. 9 is a graph illustrating a dependency of a change rate of a pipe rigidity on conversion rates of a thickness and an elastic modulus, the graph serving for illustrating an effect of the diagnosis system according to the second example embodiment of the present invention.

Fig. 10 is a block diagram illustrating a hardware configuration example of the diagnosis system according to each of the example embodiments of the present invention.

[Example Embodiment]

Hereinafter, example embodiments of the present invention will be described with reference to the drawings. The example embodiments to be described below are subjected to technically preferable limitations in order to embody the present invention, but do not limit the scope of the invention to the following. In all the drawings for use in describing the following example embodiments, the same reference numerals are assigned to similar spots unless there is a specific reason. In the following example embodiments, repeated descriptions of similar configurations/operations may be omitted. Orientations of arrows in the drawings are merely examples, and do not limit orientations of signals between blocks.

(First Example Embodiment)

First, a diagnosis system according to a first example embodiment of the present invention will be described with reference to the drawings.

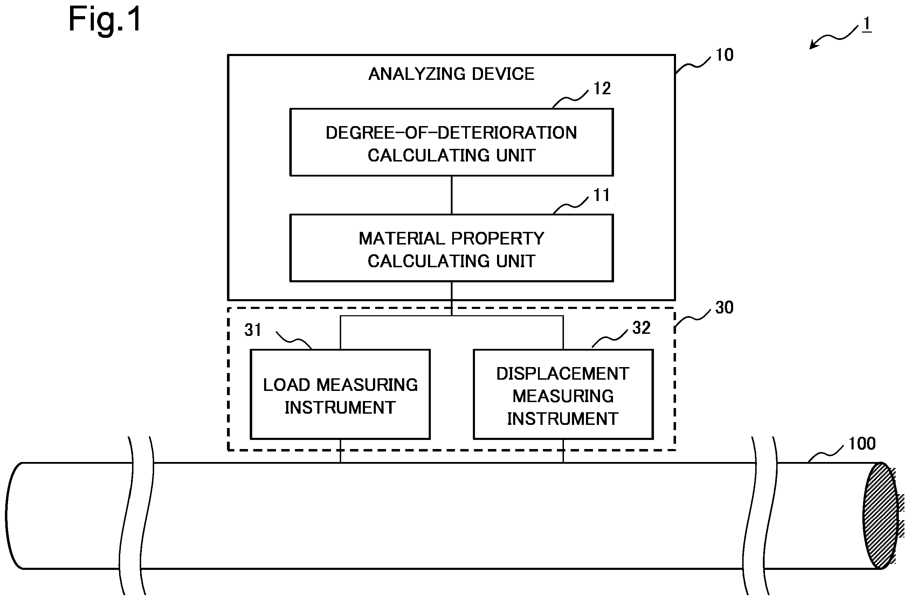

Fig. 1 is a conceptual diagram illustrating a configuration of a diagnosis system 1 of the present example embodiment. The diagnosis system 1 includes at least an analyzing device 10. The analyzing device 10 is connected to a measuring device 30 that measures a material property of a pipeline 100. The analyzing device 10 acquires information regarding the material property of the pipeline 100 from the measuring device 30. The diagnosis system 1 may include the measuring device 30.

As in Fig. 1, the analyzing device 10 includes a material property calculating unit 11, and a degree-of-deterioration calculating unit 12.

The material property calculating unit 11 (also called a material property calculating means) acquires measurement information regarding the material property of the pipeline 100 from the measuring device 30. The material property calculating unit 11 calculates the material property of the pipeline 100, based on the measurement information acquired from the measuring device 30. In other words, the material property calculating unit 11 calculates the material property of the pipeline 100, based on measurement information including a load applied to the pipeline 100 being inspected and a displacement associated with the load applied to the pipeline 100. The material property calculating unit 11 outputs the calculated material property of the pipeline 100 to the degree-of-deterioration calculating unit 12.

The degree-of-deterioration calculating unit 12 (also called a degree-of-deterioration calculating means) acquires the material property of the pipeline 100 from the material property calculating unit 11. The degree-of-deterioration calculating unit 12 compares the acquired material property of the pipeline 100 with a material property of the pipeline 100 in a normal state, and calculates a degree of deterioration of the pipeline 100, based on a difference between the material properties. In other words, the degree-of-deterioration calculating unit 12 calculates the degree of deterioration of the pipeline 100 based on the material property of the pipeline 100, which is calculated by the material property calculating unit 11.

For example, the degree of deterioration of the pipeline 100 calculated by the degree-of-deterioration calculating unit 12 is transmitted to an external system and a display device. The degree of deterioration transmitted to the external system and the display device is provided as display information to an administrator who manages the pipeline 100, and the like.

The measuring device 30 includes a load measuring instrument 31 and a displacement measuring instrument 32. The load measuring instrument 31 measures the load applied to the pipeline 100. The displacement measuring instrument 32 measures the displacement of the pipeline 100. The measuring device 30 transmits, to the analyzing device 10, load information regarding the load measured by the load measuring instrument 31 and displacement information regarding the displacement of the pipeline 100, which is measured by the displacement measuring instrument 32.

As described above, the diagnosis system of the present example embodiment calculates the degree of deterioration of the pipeline being inspected, which includes the material property. Therefore, the diagnosis system of the present example embodiment can calculate the state of degradation of the pipeline with sufficient diagnostic accuracy.

(Second Example Embodiment)

Next, a diagnosis system of a second example embodiment of the present invention will be described with reference to the drawings.

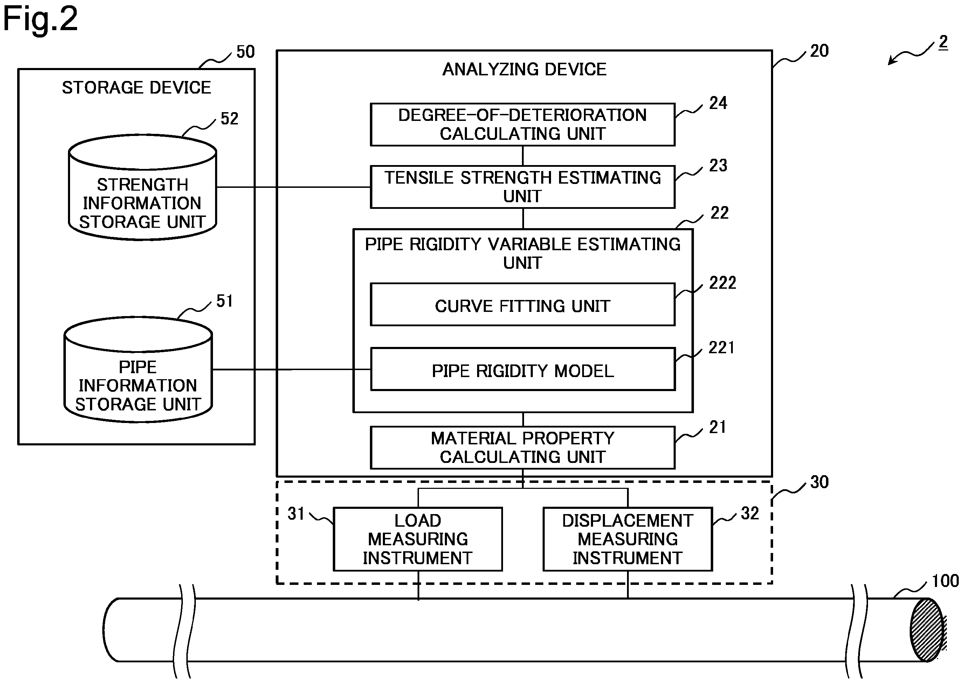

Fig. 2 is a conceptual diagram illustrating a configuration of a diagnosis system 2 of the present example embodiment. The diagnosis system 2 includes at least an analyzing device 20 and a storage device 50. The diagnosis system 2 may include a measuring device 30. The measuring device 30 has a similar configuration to that of the first example embodiment, and accordingly, is denoted by the same reference numeral.

As in Fig. 2, the analyzing device 20 includes a material property calculating unit 21, a pipe rigidity variable estimating unit 22, a tensile strength estimating unit 23, and a degree-of-deterioration calculating unit 24.

The material property calculating unit 21 acquires load information applied to a pipeline 100 being inspected and the displacement information of the pipeline 100. The material property calculating unit 21 calculates the material property of the pipeline 100 by using the acquired load information and displacement information. The material property calculating unit 21 outputs the calculated material property of the pipeline 100 to the pipe rigidity variable estimating unit 22.

For example, the material property calculating unit 21 acquires, from the measuring device 30, a pressure generated by a fluid that flows through the inside of the pipeline 100 or an earth pressure from embedding soil as the load information. The material property calculating unit 21 may acquire, from the measuring device 30, a pressure artificially applied to the pipeline 100 as the load information.

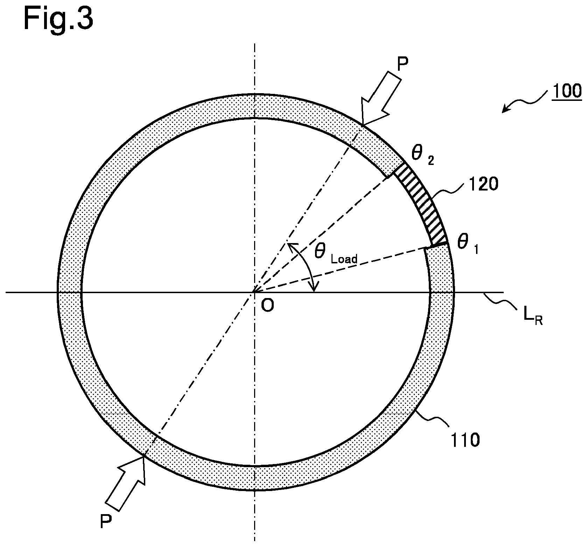

One example of a method for acquiring load information and displacement information of the pipeline 100 will be described with reference to the drawings. Fig. 3 is a cross-sectional view of the pipeline 100 which is partly degraded. Hereinafter, with regard to the pipeline 100, a normal region is described as a healthy portion 110, and a region in which degradation is observed is described as a degraded portion 120.

For example, in the cross-sectional view of Fig. 3, a load P is applied in a radial direction toward a center O of a cross-sectional circle of the pipeline 100 from two points on an outer surface of the cross-sectional circle, the two points being in a point-symmetrical positional relationship with respect to the center O. In an example of Fig. 3, the load P is applied from both sides of the pipeline 100 in such a way that an angle $\theta_{Load}$ is made with respect to a reference line $L_R$ that passes through the center O of the cross-sectional circle of the pipeline 100. When measured data of the load applied in the orientation of the center O from both sides of the pipeline 100 in such a way that the angle $\theta_{Load}$ is made with respect to the reference line $L_R$ and measured data of a displacement of the pipeline 100 at that time are used, the load information and displacement information of the pipeline 100 can be acquired. The angle $\theta_{Load}$ at which the measurement is performed may be set at only one spot or may be set at a plurality of spots. When the measurement is performed at a plurality of spots, the measurement may be performed at equal intervals, or the measurement may be performed intensively for one part. For example, the measurement may be performed a plurality of times, and as a result of the measurement, another measurement may be performed more intensively for a part that is displaced largely.

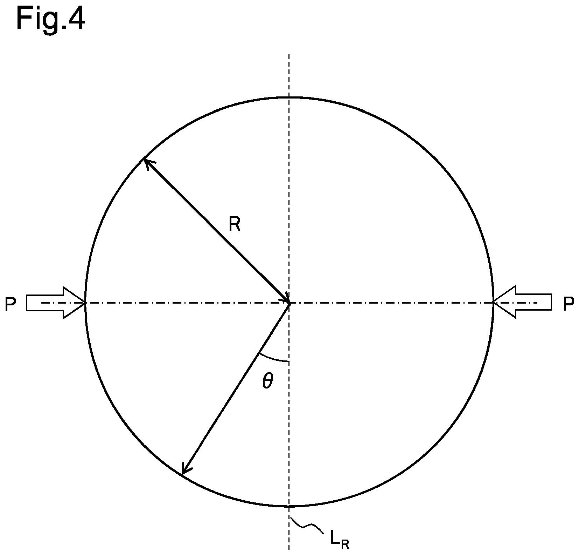

A method for calculating the material property by the material property calculating unit 21 will be described by taking an example. Fig. 4 is a diagram for illustrating an example of calculating a material property of a pipe having a circular cross section. In the example of Fig. 4, a radial displacement w of a pipe made of a uniform material and having a uniform thickness, the radial displacement w occurring when the load P is applied from both sides of the pipe, is calculated.

The radial displacement w of the pipe made of a uniform material and having a uniform thickness, the radial displacement w occurring when the load P is applied from both sides of the pipe as illustrated in Fig. 4, is acquired by the following Equation 1. In Equation 1, R is a pipeline radius, E is an elastic modulus of the pipe, I is a moment of inertia of area, and $\theta$ (also called a circumferential position) is an angle with respect to the reference line $L_R$.

$$w = \frac{PR^3}{4EI}\left(\cos\theta + \theta\sin\theta - \frac{4}{\pi}\right) \qquad (1)$$

When Equation 1 is represented in the form of the Hooke's law, and the moment of inertia of area is represented as I, pipe rigidity K can be defined by the following Equation 2. The pipe rigidity K at the circumferential position $\theta$ can be determined by the elastic modulus E, thickness t, and radius R of the pipeline 100.

$$K = \frac{P}{w} = \frac{4EI}{R^3\left(\cos\theta + \theta\sin\theta - \frac{4}{\pi}\right)} \qquad (2)$$

Generally, as in a thickness t(0) and an elastic modulus E($\theta$), the thickness t and the elastic modulus E can be represented as functions of the circumferential position $\theta$ of the pipe. When the number of measurement points is one, an average thickness tave and an elastic modulus $E_{ave}$ are acquired by using a measured value of the pipe rigidity K. In contrast, when the number of measurement points is plural, a thickness $t_e(\theta)$ and an elastic modulus $E_e(\theta)$, which are estimated values of spatial distributions of pipe rigidity variables, are acquired by using measured values of the pipe rigidity K and a pipe rigidity model 221.

For example, when the pipeline 100 is locally degraded within a range of circumferential positions $\theta_1$ to $\theta_2$ as in Fig. 3, the thickness $t_e(\theta)$ and the elastic modulus $E_e(\theta)$ can be estimated by using measurement results of the plurality of points.

The pipe rigidity variable estimating unit 22 estimates the pipe rigidity variables of the pipeline 100 by using the material property of the pipeline 100, which is calculated by the material property calculating unit 21. For example, the pipe rigidity variable estimating unit 22 refers to premeasured pipe rigidity variables of the time when the pipeline 100 is normal, applies the pipe rigidity variables, which are referred to, to the pipe rigidity model 221, and estimates the estimated values of the pipe rigidity variables. The pipe rigidity variable estimating unit 22 includes the pipe rigidity model 221 and a curve fitting unit 222. The curve fitting refers to acquiring a curve that fits experimentally acquired data or limiting condition in the best way.

The pipe rigidity model 221 can be expressed as $K(\theta|\theta_\alpha,\Theta_\beta)$ as functions of the circumferential position $\theta$ where the load P is applied, a pipe rigidity variable $\theta_\alpha$ of the healthy portion 110, a pipe rigidity variable $\theta_\beta$ of the degraded portion 120, an estimated value $\Theta_\beta$ of the pipe rigidity variable, and the circumferential positions $\theta_1$ and $\theta_2$ of the degraded portion 120. The pipe rigidity variable $\theta_\alpha$ of the healthy portion 110, the pipe rigidity variable $\theta_\beta$ of the degraded portion 120, and the estimated value $\Theta_\beta$ of the pipe rigidity variable include parameters indicated in square brackets of the following Equations 3 to 5, respectively.

$$\theta_\alpha = [E_\alpha, t_\alpha, R] \qquad (3)$$

$$\theta_\beta = [E_\beta, t_\beta, R] \qquad (4)$$

$$\Theta_\beta = [\theta_\beta, \theta_1, \theta_2] \qquad (5)$$

For example, the pipe rigidity model 221 can be calculated by defining a trial function as $a\cos\theta$ and by using Equation 6 from a radial displacement acquired by the Rayleigh method. A parameter f on the right side of Equation 6 is acquired by Equation 7. As the pipe rigidity variable $\theta_\alpha$ of the healthy portion, a value described in a specification drawing needs only to be stored in a pipe information storage unit 51.

$$K(\theta|\theta_\alpha,\Theta_\beta) = \frac{9f(E_\alpha, I_\alpha, E_\beta, I_\beta, \theta_1, \theta_2)}{4R^3} \ \cos\theta \qquad (6)$$

$$f(E_\alpha, I_\alpha, E_\beta, I_\beta, \theta_1, \theta_2)$$
$$= E_\alpha I_\alpha \left(\frac{\sin4\theta_1}{4} - \frac{\sin4\theta_2}{4} + \theta_1 - \theta_2 + 2\pi\right) \ - E_\beta I_\beta \left(\frac{\sin4\theta_1}{4} - \frac{\sin4\theta_2}{4} + \theta_1 - \theta_2\right) \qquad (7)$$

The curve fitting unit 222 estimates an estimated value $\Theta_{e\beta}$ of a pipe rigidity variable in which an error between a pipe rigidity calculated by using the load and the displacement, which are included in the measurement information of the pipeline 100, and a pipe rigidity calculated by using the pipe rigidity model 221 becomes minimum. For example, by using a pipe rigidity $K_{exp}(\theta)$ calculated from measured values and the pipe rigidity model $K(\theta|\theta_\alpha,\Theta_\beta)$, the curve fitting unit 222 acquires the circumferential positions $\theta_1$ and $\theta_2$ of the degraded portion, which satisfy the following Equation 8, and an estimated value $\Theta_{e\beta}$ of the pipe rigidity variable.

$$\Theta_{e\beta} = \mathrm{argmin}\left[\sum_i^N \left\|K(\theta_i|\theta_\alpha, \Theta_\beta) - K_{exp}(\theta_i)\right\|^2\right] \qquad (8)$$

For example, by using a nonlinear optimization method such as the Levenberg-Marquardt method, the curve fitting unit 222 acquires the circumferential positions $\theta_1$ and $\theta_2$ of the degraded portion and the estimated value $\Theta_{e\beta}$ of the pipe rigidity variable.

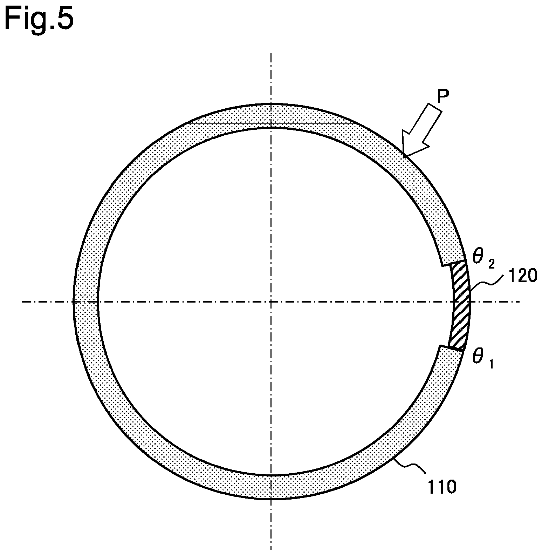

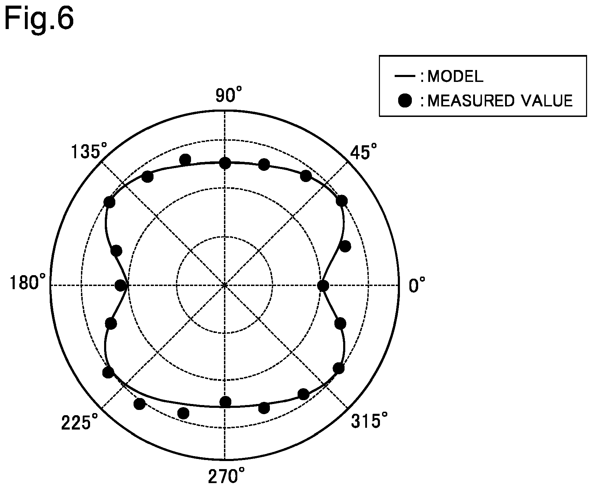

Figs. 5 and 6 are diagrams for illustrating the pipe rigidity $K_{exp}(\theta)$ calculated from the measured values, and the pipe rigidity model $K(\theta|\theta_\alpha, \Theta_\beta)$.

For the pipeline 100 including the degraded portion 120 in Fig. 5, loads and displacements are measured at regular intervals in the circumferential direction. Fig. 6 is acquired by the pipe rigidity $K_{exp}(\theta)$ calculated by using the loads and the displacements and a circumferential direction dependency of the pipe rigidity, which is calculated by using the pipe rigidity model $K(\theta|\theta_\alpha,\Theta_\beta)$ being stacked on each other and plotted.

The curve fitting unit 222 acquires the circumferential positions $\theta_1$ and $\theta_2$ of the degraded portion 120 and the

estimated value $\Theta_{e\beta}$ of the pipe rigidity variable in such a way that an error between the pipe rigidity $K_{exp}(\theta)$ calculated by using the loads and the displacements and the circumferential direction dependency of the pipe rigidity, which is calculated by using the pipe rigidity model $K(\theta|\theta_\alpha,\Theta_\beta)$, becomes minimum.

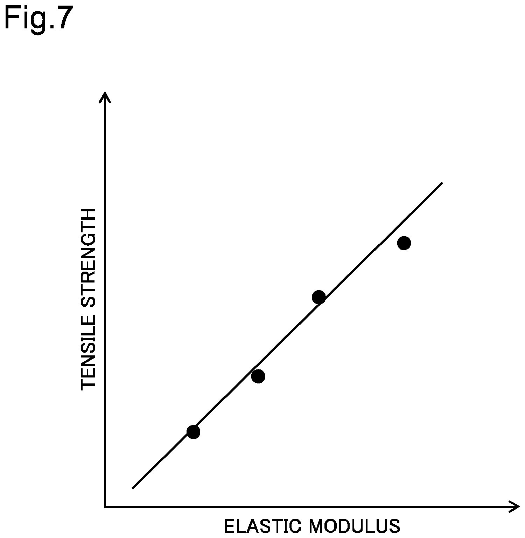

The tensile strength estimating unit 23 estimates a tensile strength of the pipeline 100 by using the pipe rigidity variable estimated by the pipe rigidity variable estimating unit 22. In other words, the tensile strength estimating unit 23 refers to a strength information storage unit 52, and estimates the tensile strength of the pipeline 100 based on a correlation relationship between a tensile strength and the pipe rigidity variable $\theta_\beta$ acquired in advance by using a test pipe. For example, as in Fig. 7, a correlation relationship between a tensile strength $\sigma_{max}$ and an elastic modulus E as one of pipe rigidity variables acquired by using the test pipe is acquired in advance, and a strength estimation equation created from the correlation relationship is used, whereby the tensile strength $\sigma_{max}$ of the pipeline 100 can be estimated.

The degree-of-deterioration calculating unit 24 calculates the degree of deterioration of the pipeline 100 by using the tensile strength estimated by the tensile strength estimating unit 23. For example, by using the following Equation 9, the degree-of-deterioration calculating unit 24 calculates, as a degree of deterioration $L_d$, a difference between a calculated tensile strength $\sigma_2$ and a tensile strength $\sigma_1$ of a normal state. The degree-of-deterioration calculating unit 24 may calculate, as the degree of deterioration $L_d$, change rates of the calculated tensile strength $\sigma_2$ and the tensile strength $\sigma_1$ of a normal state, and the like.

$$L_d = \sigma_2 - \sigma_1 \qquad (9)$$

The storage device 50 includes the pipe information storage unit 51 and the strength information storage unit 52.

In the pipe information storage unit 51, the pipe rigidity variable $\theta_\alpha$ of the healthy portion 110, which is based on a design specification and the like, is stored. The pipe information storage unit 51 is referred to at the time when the pipe rigidity variable estimating unit 22 creates the pipe rigidity model 221.

In the strength information storage unit 52, the correlation relationship between the tensile strength and the pipe rigidity variable $\theta_\beta$ acquired in advance by using the test pipe is stored. The strength information storage unit 52 is referred to at the time when the tensile strength estimating unit 23 estimates the tensile strength $\sigma_{max}$ from the estimated value $\Theta_\beta$ of the pipe rigidity variable.

The above is the description of the configuration of the diagnosis system 1 of the present example embodiment. Subsequently, a diagnostic method of the pipeline being inspected, which is performed by the diagnosis system 2, will be described with reference to the drawings.

(Operation)

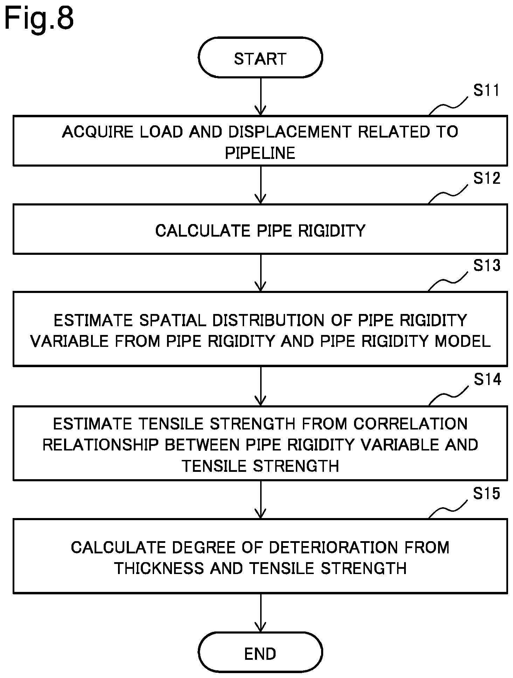

Fig. 8 is a flowchart for illustrating the diagnostic method for the pipeline being inspected, which is performed by the diagnosis system 2 of the present example embodiment. In the description along the flowchart of Fig. 8, an operation of the diagnosis system 2 will be described as a main body of the operation.

First, the diagnosis system 2 applies a load P to the pipeline 100, and measures the displacement w of the pipeline 100, which is caused by the application of the load P (step S11). For example, the diagnosis system 2 applies the load P while changing the circumferential position $\theta$ of the pipeline 100, and measures the displacement w of the pipeline 100, which is associated with the load P.

Next, the diagnosis system 2 calculates the pipe rigidity $K_{exp}(\theta)$ by using the load P and the displacement w, which are measured at every circumferential position $\theta$ (step S12).

Next, the diagnosis system 2 performs curve fitting for the pipe rigidity $K_{exp}(\theta)$ and the pipe rigidity model $K(\theta|\theta_\alpha,\Theta_\beta)$, thereby acquiring the circumferential position $(\theta_1, \theta_2)$ of the degraded portion 120 and the estimated value $\Theta_\beta$ of the pipe rigidity variable (step S13). At the time of creating the pipe rigidity model 221, the diagnosis system 2 refers to the pipe rigidity variable $\theta_\alpha$ of the healthy portion 110, which is stored in the pipe information storage unit 51.

Next, the diagnosis system 2 estimates the tensile strength $\sigma_{max}$ by using the estimated value $\Theta_\beta$ of the pipe rigidity variable of the degraded portion 120 and the correlation relationship between the pipe rigidity variable and the tensile strength which is stored in the strength information storage unit 52 (step S14).

Then, the diagnosis system 2 calculates the degree of deterioration $L_d$ by using the estimated tensile strength $\sigma_{max}$ (step S15).

The above is the description of the diagnostic method of the pipeline being inspected, which is performed by the diagnosis system 2 along the flowchart of Fig. 8.

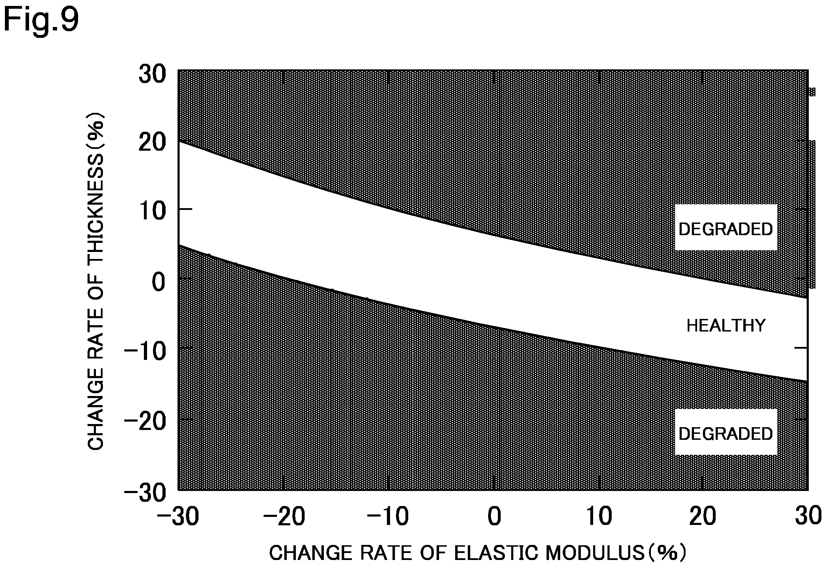

Fig. 9 is a graph in which a relationship between a change rate of the elastic modulus and a change rate of the thickness is plotted with regard to the pipe rigidity of the pipeline being inspected. In the graph of Fig. 9, regions where the pipeline 100 is degraded are filled. As illustrated in the graph of Fig. 9, the degradation of the pipeline depends on both of the thickness and the elastic modulus. Therefore, both pieces of information which are the thickness and the elastic modulus are required to grasp the state of degradation correctly.

In a general diagnostic method of the state of degradation of the pipeline, an exterior appearance of the pipeline is visually inspected. The state of degradation of the pipeline also appears on a change of the thickness in the pipeline and a change of the material property such as the elastic modulus. Therefore, only the visual inspection is not sufficient for the diagnosis of the pipeline.

The thickness of the pipeline may also be acquired by the method disclosed in PTL 1 (Japanese Unexamined Patent Application Publication No. 2010-071741), however information regarding the material property such as the elastic modulus cannot be acquired by such method. For example, when the change rate of the thickness is 0%, and the change rate of the elastic modulus is -30%, it is estimated that the pipeline is degraded from the change rate of the elastic modulus. However, in the method of PTL 1, since the state of degradation of the pipeline is determined by only the change rate of the thickness of the pipeline, it is erroneously determined that the pipeline is normal.

Meanwhile, the method of the present example embodiment enables estimating the thickness and elastic modulus of the degraded portion of the pipeline by using the pipe rigidity model and the spatial distribution of the pipe rigidity acquired from the load and the displacement which are applied to the pipeline. Therefore, the method of the present example embodiment enables correctly grasping the state of degradation of the pipeline.

As described above, the method of the present example embodiment enables correctly diagnosing the state of degradation of the pipeline by using the spatial distribution of the pipe rigidity calculated based on the measurement information of the load and the displacement which are applied to the pipeline.

(Hardware)

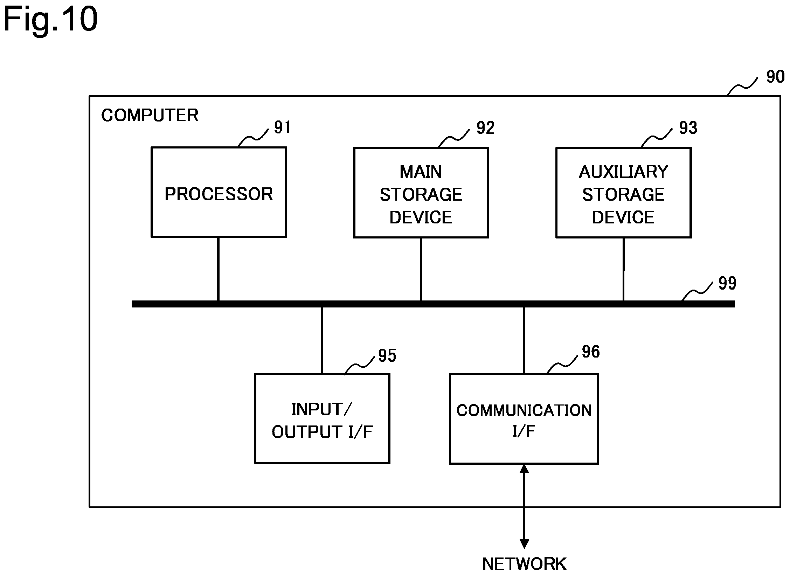

A computer 90 in Fig. 10 will be described as an example of a hardware configuration that achieves the diagnosis system according to each of the example embodiments of the present invention. The computer 90 of Fig. 10 is a configuration example for achieving the diagnosis system of each of the example embodiments, and does not limit the scope of the present invention.

As in Fig. 10, the computer 90 includes a processor 91, a main storage device 92, an auxiliary storage device 93, an input/output interface 95, and a communication interface 96. In Fig. 10, the interface is abbreviated and described as I/F. The processor 91, the main storage device 92, the auxiliary storage device 93, the input/output interface 95, and the communication interface 96 are connected via a bus 99 to one another in such a way as to be capable of mutual data communication. The processor 91, the main storage device 92, the auxiliary storage device 93, and the input/output interface 95 are connected via the communication interface 96 to a network such as the Internet and an intranet.

The processor 91 develops a program, which is stored in the auxiliary storage device 93 or the like, in the main storage device 92, and executes the developed program. In the present example embodiment, a configuration of using a software program installed in the computer 90 may be adopted. The processor 91 executes processing performed by the diagnosis system according to the present example embodiment.

The main storage device 92 has a region in which the program is developed. The main storage device 92 may be, for example, a volatile memory such as a dynamic random access memory (DRAM). A nonvolatile memory such as magnetoresistive random access memory (MRAM) may be configured and/or added as the main storage device 92.

The auxiliary storage device 93 stores a variety of data. The auxiliary storage device 93 is composed of hard disk or a local disk such as a flash memory. If possible, a configuration in which a variety of data are stored in the main storage device 92 is adopted, and the auxiliary storage device 93 may be omitted.

The input/output interface 95 is an interface for connecting the computer 90 and peripherals to each other. The communication interface 96 is an interface for connecting to an external system or device through a network such as the Internet and an intranet based on a standard or a specification. The input/output interface 95 and the communication interface 96 may be integrated with each other as an interface that connects to an external instrument.

The computer 90 may be configured in such a way that input instruments such as a keyboard, a mouse, and a touch panel are connected thereto according to needs. These input instruments are used for inputting information and setting. When a touch panel is used as the input instrument, a configuration in which a display screen of a display instrument also serves as an interface of the input instrument may be adopted. Data communication between the processor 91 and the input instrument may be relayed by the input/output interface 95.

The computer 90 may be equipped with a display instrument for displaying information. When the computer 90 is equipped with the display instrument, it is preferable that the computer 90 be provided with a display control device (not shown) for controlling display of the display instrument. The display instrument may be connected to the computer 90 via the input/output interface 95.

Moreover, the computer 90 may be equipped with a disk drive according to needs. For example, the disk drive is connected to the bus 99. The disk drive relays reading of data/program from a recording medium (program recording medium, not shown), writing of a processing result of the computer 90 to the recording medium, and the like between the processor 91 and the recording medium. For example, the recording medium can be achieved by an optical recording medium such as a compact disc (CD) and a digital versatile disc (DVD). The recording medium may be achieved by s semiconductor recording medium such as a universal serial bus (USB) memory and a secure digital (SD) card, a magnetic recording medium such as a flexible disk, and recording mediums according to other systems.

The above is one example of a hardware configuration for enabling the diagnosis system according to each of the example embodiments of the present invention. The hardware configuration of Fig. 10 is one example of a hardware configuration for executing computational processing of the diagnosis system of each of the example embodiments, and does not limit the scope of the present invention. Moreover, a program causing a computer to execute the processing related to the diagnosis system according to each of the example embodiments is also incorporated in the scope of the present invention. Further, such a program recording medium recording the program according to each of the example embodiments is also incorporated in the scope of the present invention.

Components of the diagnosis system of each of the example embodiments can be randomly combined with one another. The components of the diagnosis system of each of the example embodiments may be achieved by software, or may be achieved by circuits.

The block diagrams and the conceptual diagrams used in the description of each of the example embodiments illustrate not a hardware-unit configuration but functional-unit blocks. In these drawings, each of the components is described to be achieved by one instrument; however, an achieving means thereof is not limited to such a single instrument. That is, these components may be configured to be physically divided, or may be configured to be logically divided.

While the invention has been particularly shown and described with reference to exemplary embodiments thereof, the invention is not limited to these embodiments. It will be understood by those of ordinary skill in the art that various changes in form and details may be made therein without departing from the spirit and scope of the present invention as defined by the claims.

This application is based upon and claims the benefit of priority from Japanese patent application No. 2017-240475 filed on December 15, 2017, the disclosure of which is incorporated herein in its entirety by reference.

[Reference signs List]

| | |
|---|---|
| 10, 20 | Analyzing device |
| 11, 21 | Material property calculating unit |
| 12, 24 | Degree-of-deterioration calculating unit |
| 22 | Pipe rigidity variable estimating unit |
| 23 | Tensile strength estimating unit |
| 30 | Measuring device |
| 31 | Load measuring instrument |
| 32 | Displacement measuring instrument |
| 50 | Storage device |
| 51 | Pipe information storage unit |
| 52 | Strength information storage unit |
| 221 | Pipe rigidity model |
| 222 | Curve fitting unit |

**Claims**

1. An analyzing device comprising:

    material property calculating means configured to calculate a material property of a pipeline being inspected, based on measurement information including a load applied to the pipeline being inspected and a displacement associated with a load applied to the pipeline being inspected; and
    degree-of-deterioration calculating means configured to calculate a degree of deterioration of the pipeline being inspected, based on the material property of the pipeline being inspected, the material property being calculated by the material property calculating means.

2. The analyzing device according to claim 1, further comprising:

    pipe rigidity variable estimating means configured to estimate a pipe rigidity variable of the pipeline being inspected, by using the material property of the pipeline being inspected, the material property being calculated by the material property calculating means; and
    tensile strength estimating means configured to estimate a tensile strength of the pipeline being inspected, by using the pipe rigidity variable estimated by the pipe rigidity variable estimating means, wherein
    the degree-of-deterioration calculating means is configured to
    calculate the degree of deterioration of the pipeline being inspected, by using the tensile strength estimated by the tensile strength estimating means.

3. The analyzing device according to claim 2, wherein
    the pipe rigidity variable estimating means includes:

    a pipe rigidity model expressed as a function of a position at which a load is applied to the pipeline being inspected, the pipe rigidity variable of a normal portion of the pipeline being inspected, a pipe rigidity variable of a degraded portion of the pipeline being inspected, an estimated value of the pipe rigidity variable, and a position of a degraded portion of the pipeline being inspected; and
    curve fitting means which is configured to estimate an estimated value of the pipe rigidity variable in which an error between a pipe rigidity calculated by using a load and a displacement being included in the measurement information of the pipeline being inspected and a pipe rigidity calculated by using the pipe rigidity model becomes minimum.

4. The analyzing device according to claim 3, wherein
    the pipe rigidity variable estimating means is configured to
    refer to the premeasured pipe rigidity variable at a time when the pipeline being inspected is normal, apply the pipe rigidity variable, which is referred to, to the pipe rigidity model, and estimate an estimated value of the pipe rigidity variable, and
    the tensile strength estimating means is configured to
    apply the estimated value of the pipe rigidity variable, the estimated value being estimated by the pipe rigidity variable estimating means, to a correlation relationship between the tensile strength and the pipe rigidity variable of the pipeline being inspected, the pipe rigidity variable being acquired in advance, and estimate the tensile strength of the pipeline being inspected.

5. The analyzing device according to any one of claims 2 to 4, wherein
    the degree-of-deterioration calculating means is configured to calculate, as the degree of deterioration, a difference between the tensile strength estimated by the tensile strength estimating means and the pipe rigidity variable of the pipeline being inspected at a time when the pipeline being inspected is normal, the pipe rigidity variable being acquired in advance.

6. The analyzing device according to any one of claims 2 to 5, wherein the pipe rigidity variable estimating means is configured to estimate, as the pipe rigidity variable, a thickness and an elastic modulus of the pipeline being inspected.

7. The analyzing device according to claim 6, further comprising:

    pipe information storing means configured to store the pipe rigidity variable at a time when the pipeline being inspected is normal; and

strength storing means configured to store a correlation relationship between the elastic modulus and the tensile strength of the pipeline being inspected.

8. A diagnosis system comprising:

   the analyzing device according to any one of claims 1 to 7; and
   a measuring device that includes a load measuring instrument that measures a load applied to the pipeline being inspected, and a displacement measuring instrument that measures a displacement associated with a load applied to the pipeline being inspected, and transmits the measurement information to the analyzing device, the measurement information including load information regarding a load measured by the load measuring instrument, and displacement information regarding a displacement measured by the displacement measuring instrument.

9. A diagnostic method comprising:

   calculating a material property of a pipeline being inspected, based on measurement information including a load applied to the pipeline being inspected and a displacement associated with a load applied to the pipeline being inspected; and
   calculating a degree of deterioration of the pipeline being inspected, based on the calculated material property of the pipeline being inspected.

10. A program recording medium recording a program causing a computer to execute:

    processing of calculating a material property of a pipeline being inspected, based on measurement information including a load applied to the pipeline being inspected and a displacement associated with a load applied to the pipeline being inspected; and
    processing of calculating a degree of deterioration of the pipeline being inspected, based on the calculated material property of the pipeline being inspected.

Fig.1

ANALYZING DEVICE — 10

DEGREE-OF-DETERIORATION CALCULATING UNIT — 12

MATERIAL PROPERTY CALCULATING UNIT — 11

LOAD MEASURING INSTRUMENT — 31

DISPLACEMENT MEASURING INSTRUMENT — 32

30

100

1

EP 3 726 193 A1

Fig.2

EP 3 726 193 A1

# Fig.3

Fig.4

Fig.5

## Fig.6

Fig.7

# Fig.8

START

S11

ACQUIRE LOAD AND DISPLACEMENT RELATED TO PIPELINE

S12

CALCULATE PIPE RIGIDITY

S13

ESTIMATE SPATIAL DISTRIBUTION OF PIPE RIGIDITY VARIABLE FROM PIPE RIGIDITY AND PIPE RIGIDITY MODEL

S14

ESTIMATE TENSILE STRENGTH FROM CORRELATION RELATIONSHIP BETWEEN PIPE RIGIDITY VARIABLE AND TENSILE STRENGTH

S15

CALCULATE DEGREE OF DETERIORATION FROM THICKNESS AND TENSILE STRENGTH

END

Fig.9

# Fig.10

COMPUTER 90

- PROCESSOR 91
- MAIN STORAGE DEVICE 92
- AUXILIARY STORAGE DEVICE 93
- 99
- INPUT/ OUTPUT I/F 95
- COMMUNICATION I/F 96

NETWORK

EP 3 726 193 A1

## INTERNATIONAL SEARCH REPORT

| International application No. |
| --- |
| PCT/JP2018/045203 |

**A. CLASSIFICATION OF SUBJECT MATTER**
Int.Cl. G01M13/00(2019.01)i, G01N3/08(2006.01)i

According to International Patent Classification (IPC) or to both national classification and IPC

**B. FIELDS SEARCHED**

Minimum documentation searched (classification system followed by classification symbols)
Int.Cl. G01M13/00, G01N3/08

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2005-231153 A (NTT INFRANET) 02 September 2005, paragraphs [0002], [0013]-[0031], fig. 1-6 (Family: none) | 1, 8-10 |
| A | | 2-7 |
| X | JP 2017-207441 A (NIPPON TELEGRAPH AND TELEPHONE CORP.) 24 November 2017, paragraphs [0002], [0015]-[0056], fig. 1-4 (Family: none) | 1, 8-10 |
| A | | 2-7 |
| A | JP 63-158437 A (KAWASAKI STEEL CORP.) 01 July 1988, entire text, all drawings (Family: none) | 1-10 |
| A | WO 2017/078004 A1 (NEC CORP.) 11 May 2017, entire text, all drawings & US 2018/0292292 A1, entire text, all drawings & GB 2558493 A | 1-10 |

☐ Further documents are listed in the continuation of Box C.     ☐ See patent family annex.

| | |
| --- | --- |
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 04 February 2019 (04.02.2019) | 19 February 2019 (19.02.2019) |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010071741 A
- JP 2006038598 A
- JP 2017240475 A